# EUROPÄISCHE PATENTANMELDUNG

(11) **EP 1 577 824 A1**
(43) Veröffentlichungstag der Anmeldung: **21.09.2005**
(21) Anmeldenummer: 04101080.2
(22) Anmeldetag: 16.03.2004
(51) Int. Cl.: G06K 7/00, G06F 17/60, H04L 29/06

(54) **Verfahren zur Bereitstellung von Informationen über ein Produkt**

(71) Anmelder: Swisscom Mobile AG, 3050 Bern (CH)
(72) Erfinder: Lauper, Eric, 3014 Bern (CH)
(74) Vertreter: Saam, Christophe

(57) **Zusammenfassung**

Verfahren, um Information über ein Produkt (1) zu erhalten, mit folgenden Schritten:
das Produkt (1) wird mit mehreren Codes (100, 101) markiert, die in einem oder mehreren RFID-Tags (10, 10') abgelegt sind,
mindestens einer der benannten Codes wird kontaktlos mit einem RFID-Lesegerät (2, 3) gelesen,
das benannte Lesegerät (2, 3) sendet ein Set von einem oder mehreren gelesenen Codes über ein Telekommunikationsnetz (4) an einen Namen-Dienstserver (6),
der benannte Namendienstserver (6) antwortet mit der Adresse einer oder mehreren Hypertext-Seiten,
es wird anhand der benannten Hypertext-Seiten auf die gewünschte Information (7) zugegriffen,
dadurch gekennzeichnet, dass
nicht alle vom RFID-Lesegerät gelesenen Codes (100, 101) sind im benannten gesendeten Set enthalten, und dass
der oder die Codes (100, 101), die im benannten Set enthalten sind, im benannten Lesegerät (2, 3) ausgewählt werden.

## Beschreibung

Die vorliegende Erfindung betrifft ein Verfahren, mit welchem einem Benutzer Informationen und Dienstleistungen zur Verfügung gestellt werden.

Es sind bereits Verfahren bekannt, um anhand eines sogenannten RFID-Elements (oder Tags) Informationen über ein Produkt zu bekommen. Dabei verfügen manche Tags über einen Speicherbereich, der kontaktlos mit einem RFID-Lesegerät gelesen werden kann, und in welchem die gewünschte Information eingespeichert wird. Da der Preis der Tags stark von der Grösse des Speichers abhängig ist, werden solche Tags vor allem eingesetzt, wenn nur wenig Information benötigt wird; beispielsweise das Produktherstellungsdatum, eine Seriennummer, usw.

Es sind auch andere Verfahren bekannt, in welchen die gewünschte Information aus einer externen Datenbank abgeholt wird, in welcher mehrere Tags betreffende Informationen abgelegt werden. In diesem Fall wird ein Code im Tag gelesen und als Recherchenkriterium in der externen Datenbank verwendet, aus welcher die gewünschte Information abgeholt wird. Dabei ist die Verknüpfung zwischen einem Produkt und dem Datensatz in der Datenbank statisch und permanent; ein mit einem Tag markiertes Produkt ergibt stets Zugriff auf die gleiche Information.

Oft benötigen aber unterschiedliche Benutzer unterschiedliche Informationen. Ein Produkthersteller will beispielsweise wissen, wann das Produkt hergestellt wurde, während ein Endbenutzer sich vielleicht mehr für das Verfalldatum interessiert. Gewisse Informationen müssen eventuell gegenüber manchen Benutzern vertraulich behandelt werden. Gewöhnliche Verfahren, die billige Nur-Lese Tags einsetzen, bieten diese erforderliche Sicherheit und Flexibilität nicht.

Die Adresse der Datenbank, in welcher die gewünschte Information abgelegt ist, muss ausserdem dem Lesegerät bekannt und von diesem erreichbar sein. Eine Änderung dieser Adresse ist nur möglich, wenn alle Benutzer informiert wurden, was die Einsatzmöglichkeit noch einschränkt.

Oft muss die mit einem Tag verknüpfte Information mehrmals aktualisiert oder ergänzt werden. Dies kann beispielsweise erfolgen, indem eine neue Information oder ein neuer Code in den Speicher des Tags geschrieben wird, was nur im Falle eines teuren wiederbeschreibbaren Tags machbar ist, wobei das Tag ausserdem über genügend Speicher verfügen muss. Solche Tags sind oft zehn bis fünfzig Mal teurer als herkömmliche Read-only Tags.

Es ist auch möglich, den Datensatz, der dem Tag entspricht, in der externen Datenbank jederzeit zu aktualisieren. Wollen jedoch mehrere unterschiedliche Partner diese Information ändern, müssen alle über ein Schreibrecht auf dem betroffenen Bereich der Datenbank verfügen, was aus Sicherheitsgründen meistens nicht erwünscht ist.

Es ist daher ein Ziel der vorliegenden Erfindung, ein neues Verfahren und ein neues Tag anzubieten, mit welchen diese Probleme gelöst werden.

Ein anderes Ziel ist es, ein neues Verfahren anzubieten, um Information über ein Produkt zu erhalten, wobei eine ausreichende Sicherheit und Flexibilität auch mit billigeren Nur-Lese Tags möglich ist.

Es ist auch ein Ziel der vorliegenden Erfindung, ein Verfahren anzubieten, um Information über ein Produkt zu erhalten, wobei die angebotene Information jederzeit aktualisiert und ergänzt werden kann, ohne dass neue Daten in Tags geschrieben werden müssen.

Es ist auch ein Ziel der vorliegenden Erfindung, ein Verfahren anzubieten, bei welchem die elektronische Adresse des Speicherbereichs, in welchem die gewünschte Information abgelegt ist, geändert werden kann, ohne dabei alle Benutzer von Lesegeräten informieren zu müssen.

Ein anderes Ziel ist auch, dass unterschiedliche Benutzer, oder ein gleicher Benutzer bei unterschiedlichen Bedingungen, auf unterschiedliche Informationen zugreifen können.

Diese Ziele werden insbesondere durch ein Verfahren erreicht, um Information über ein Produkt zu erhalten, welches folgende Verfahrensschritte aufweist:
das Produkt wird mit mehreren Codes markiert, die in einem oder mehreren RFID-Tags abgelegt sind,
mindestens einer der benannten Codes wird kontaktlos mit einem RFID-Lesegerät gelesen,
das benannte Lesegerät sendet ein Set von einem oder mehreren gelesenen Codes über ein Telekommunikationsnetz an einen Namen-Dienstserver,
der benannte Namen-Dienstserver antwortet mit der Adresse einer oder mehrerer Hypertext-Seiten,
es wird anhand der benannten Hypertext-Seiten auf die gewünschte Information zugegriffen,
dadurch gekennzeichnet, dass
eine Untermenge von vom RFID-Lesegerät gelesenen Codes ist im benannten gesendeten Set enthalten, und dass
der oder die Codes, die im benannten Set enthalten sind, im benannten Lesegerät ausgewählt werden.

Dies hat unter anderem den Vorteil, dass die gewünschte Information oder Dienstleistung über eine editierbare elektronische Hypertext-Seite bereitgestellt wird.

Die Adresse der Seite entspricht dem im RFID-Tag gelesenen Code. Die Verknüpfung zwischen dem Code und der elektronische Adresse der Seite ist nicht statisch, sondern wird in einem Namen-Dienstserver registriert. Dies hat den Vorteil, dass Änderungen der Seitenadresse jederzeit möglich und leicht verfolgbar sind. Dies hat auch den Vorteil, dass es sich um ein universelles System handelt, in welchem Informationen aus jedem Mobilgerät in jedem Netz über eine einzige Adresse des Servers bestellt werden können.

Die Auswahl des mit einem Produkt verbundenen Code oder einem bestimmten Set von Codes erfolgt manuell oder automatisch im Lesegerät. Dies hat den Vorteil, dass unterschiedliche Benutzer (oder ein gleicher Benutzer unter unterschiedlichen Bedingungen) auf unterschiedliche Informationen zugreifen können, indem unterschiedliche Codes oder Sets von Codes verwendet werden. Da die verwendeten Codes erst nach deren Lesen ausgewählt werden, sind keine Vorkenntnisse über die vorhandenen Codes im Tag erforderlich. Gewisse Informationen können ausserdem Benutzern vorbehalten werden, die Sets mit mehreren Codes lesen und vorweisen können, was neue Einsatzmöglichkeiten insbesondere für sicherheitskritische Anwendungen ermöglicht.

Das ausgewählte Set von Codes umfasst eine Untermenge von gelesenen Codes. Je nach Auswahl des Lesegeräts kann diese Untermenge mindestens ein Code (oder gar kein Code), und maximal alle gelesene Codes umfassen. Die Anzahl der verwendeten Codes wird mit dem Lesegerät ausgewählt.

Die vorliegende Erfindung wird im Folgenden anhand der Figuren näher beschrieben. Es zeigen:
Fig. 1 ein Blockschaltbild eines Systems mit einem Mobilgerät, einem RFID-Lesegerät, einem RFID-Tag und einem Fernserver.
Fig. 2 schematisch ein Produkt mit mehreren unabhängig arbeitenden RFID-Tags.
Fig. 3 schematisch ein Produkt mit einem RFID-Tag, in welchem mehrere Codes eingespeichert sind.
Fig. 4 die Struktur einer Meldung mit einem Code gemäss der Erfindung.
Fig. 5 schematisch ein Lesegerät 2,3 mit welchem ein Code gemäss einer ersten Verfahrensvariante ausgewählt wird.
Fig. 6 schematisch ein Lesegerät 2,3 mit welchem ein Code gemäss einer zweiten Verfahrensvariante ausgewählt wird.

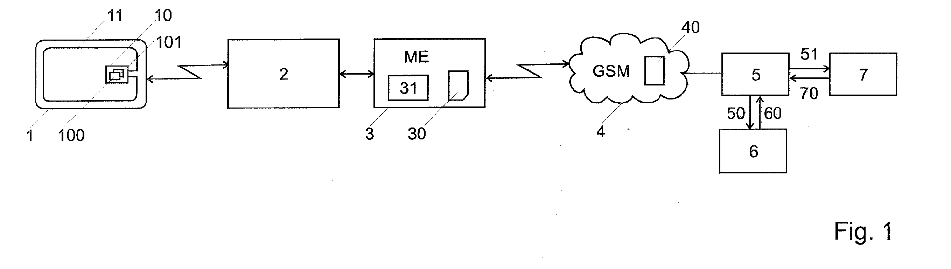

Die Figur 1 zeigt das System, das von einem Benutzer (zum Beispiel einem Mobilteilnehmer) verwendet wird, um mit dem erfindungsgemässen Verfahren Dienstleistungen oder Informationen zu bestellen. Ein Mobilgerät 3 (zum Beispiel ein Mobilfunktelefon oder ein PDA mit einer Schnittstelle für ein zellulares Mobilfunknetz) kann Kurzmeldungen (zum Beispiel SMS und USSD) und Daten (zum Beispiel IP-Pakete) aus einem Mobilfunknetz 4 empfangen und an dieses Netz senden. Das Mobilfunknetz 4 ist beispielsweise ein GSM, GPRS, HSCSD, EDGE, UMTS oder CDMA-Netz, über welches auch Daten übermittelt werden können. Das Mobilgerät 3 enthält ein Identifizierungsmodul (zum Beispiel eine SIM-Karte 30), um das Gerät durch das Netz beziehungsweise am Netz 4 zu identifizieren. Eine oder mehrere Software-Anwendungen 31 können von einem Prozessor im Mobilgerät 3 ausgeführt werden.

Das Mobilgerät 3 umfasst ausserdem einen RFID-Leseteil 2, oder ist mit einem solchen Leseteil verbunden (beispielsweise über eine USB, Firewire, PCCard, Compactflash, proprietäre, usw, Verbindung, oder über eine Bluetooth oder WLAN-kontaktlose Verbindung). Das Leseteil 2 umfasst einen Mikrokontroller und mindestens eine Antenne oder Spule, um kontaktlos Daten mit RFID-Komponenten (Tags) in einem Produkt 1 in der unmittelbaren Nähe auszutauschen. Die Datenübertragung erfolgt vorzugsweise im Frequenzbereich 13,56MHz, 900MHz und/oder 860-930MHz. Der Leseteil kann vorzugsweise wahlweise in verschiedenen Frequenzbereichen und mit unterschiedlichen RFIDs arbeiten. Die Tragweite beim Lesen der RFIDs beträgt vorzugsweise zwischen 2 und 10 Metern - je nach Orientierung des Leseteils und des Tags. Die Verbindung erfolgt vorzugsweise im Half-Duplex Modus mit einer ASK Backscatter Modulation. Das Tag wird vorzugsweise vom Leseteil 2 gespeist und braucht somit keine unabhängige Energiequelle.

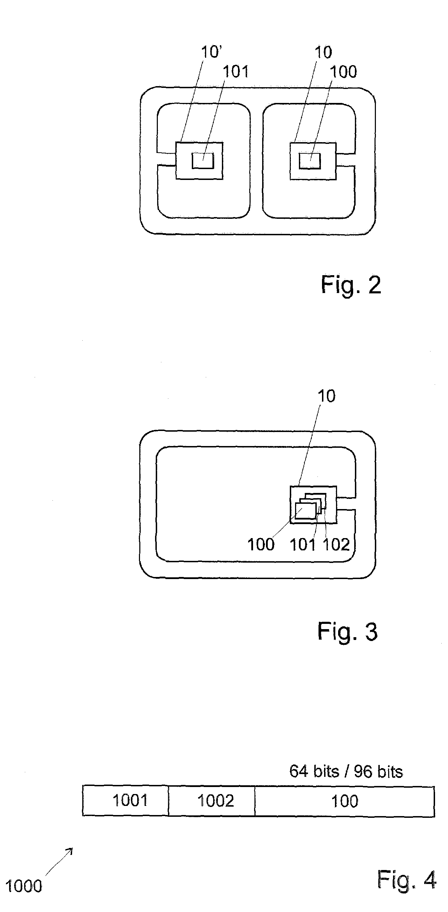

Das Produkt umfasst ein oder mehrere Tags. Die Figur 2 zeigt ein Produkt 1, das zwei Tags 10 und 10' enthält. Die Figur 3 zeigt ein Produkt mit einem einzigen Tag 10.

Jedes Tag 10 umfasst mindestens einen Chip und eine Antenne. Jeder Chip 10 beziehungsweise 10' der Figur 2 enthält einen permanenten Speicherbereich, in welchem während der Herstellung oder während der Personalisierung des Tags ein Code 100 beziehungsweise 101, usw. abgelegt wird. Auf der Variante der Figur 3 sind die mehreren Codes 100, 101, 102 im selben Chip 10 eingespeichert.

Der Code identifiziert eindeutig jedes bestimmte Tag 1; jedes Tag hat vorzugsweise einen anderen Code 100 oder ein Set von Codes 100, 101. Der Code ist vorzugsweise unfälschbar. Ein Code-Herausgeber (beispielsweise ein Netzbetreiber) kann eine Tabelle führen, auf welcher die gültigen, verbrauchten oder verfallenen Codes als solche markiert sind.

Die Codes 100, 101,102 umfassen vorzugsweise 64, 96 oder mehr Bits und sind hierarchisch organisiert. Die Antwort 1000 des Tags 10 an eine Anfrage des Leseteils 2 umfasst vorzugsweise einen Vorsatz 1001, Redundante Prüfdaten 1002 und erst dann einen Code 100, 101 oder 102 (Fig. 4) oder gleich alle Codes im Tag. Mehrere Codes in einem Produkt in der Nähe des Lesegeräts 2 können auch nacheinander gelesen werden. Die Anfrage des Lesegeräts 2,3 kann einen Nummerbereich angeben und jedes Tag 10, 10' entscheidet anhand dieses Nummerbereichs, mit welchem oder welchen Codes er diese Anfrage beantworten will. Ein Tag 10, in welchem mehrere Codes abgelegt werden, kann beispielsweise eine bestimmte Anfrage nur mit einem Code oder mit einer begrenzten Anzahl von Codes beantworten. Ein Tag kann auch die vorhandenen Codes aus Sicherheitsgründen durch einen Zeitabstand getrennt wiedergeben.

Andere Daten können im Speicherbereich des Chips 10 abgelegt und vom Leseteil 2 gelesen werden.

Das Chip 10, 10' ist vorzugsweise ein Nur-Lese-Chip, das günstig und in kleiner Grösse hergestellt werden kann; zwei Nur-Lese-Chips sind oft billiger als ein einziger wiederbeschreibarer Chip. Wiederbeschreibare Chips können aber im Rahmen der Erfindung auch eingesetzt werden.

Codes 100 werden vorzugsweise von einer gemeinsamen Autorität an verschiedene Produkthersteller, Mobilfunknetzanbieter und Mehrwertdienstanbieter verteilt; ein Teil des Codes gibt vorzugsweise die Identität des Anbieters des Produktes 1 an. Der Produktanbieter reserviert eine Reihe von Codes bei der gemeinsamen Autorität und speichert einen Teil dieser Codes in Tags 10, 10' die dann mit den Produkten vertrieben werden. Ein Produkt kann von mehreren Organisationen mit unterschiedlichen Tags versehen werden.

Mindestens eine Anwendung 31 ist im Mobilgerät 3 vorgesehen, um Codes 100, 101, 102 in benachbarten Tags über das Leseteil 2 zu lesen und um zu entscheiden, welche verwendet werden sollen, um weitere Informationen oder Dienste zu bestellen, wie später erläutert.

Das Lesen eines Codes wird vorzugsweise vom Mobilgerät 3 initiiert; möglich ist beispielsweise, dass das Mobilgerät stets oder periodisch nach benachbarten Tags sucht und Codes in gefundenen Tags liest und bearbeitet oder weiterleitet. In einer anderen, stromsparenden Variante wird das Lesen vom Benutzer des Mobilgeräts 3 initiiert, der eine entsprechende Anwendung 31 startet oder einen Befehl eingibt, wenn er ein Tag lesen will. Das Lesen der Tags mit dem Mobilgerät 3 oder mit einem anderen Gerät kann auch von einer externen Vorrichtung (zum Beispiel einer Verkaufstelle oder einem Automaten) über eine Schnittstelle im Nahbereich (zum Beispiel Bluetooth oder WLAN) über das Mobilfunknetz 4, oder über einen Link auf einer besuchten WEB oder WAP-Seite initiiert werden.

Einfache Filter und Bearbeitungsmittel können als Teil der Anwendung 31 im Mobilgerät 3 und/oder im Leseteil 2 vorgesehen werden, um ein Set von Codes unter den (mehreren) gelesenen Codes 100 auszuwählen und zu bearbeiten. Die Anwendung kann beispielsweise nur gewisse Bereiche von Codes bearbeiten und weiterleiten. Redundanzprüfungen können auch vorgesehen werden, um nicht plausible und fehlerbehaftete Codes zu löschen. Bereits verwendete Codes werden vorzugsweise in einer Datenbank im Mobilgerät 3 zwecks zukünftiger Kontrolle, statistischen Bewertungen und Backups gespeichert.

Je nach Anwendung 31 kann auch ein Passwort oder eine andere Authentifikation verlangt werden, bevor das erfindungsgemäss ausgewählte Set von Codes gelesen oder weitergeleitet wird. Das Passwort kann beispielsweise auf einen versteckten, freilegbaren Teil des Produkts 1 gedruckt werden, oder es wird dem Benutzer über einen anderen Kanal mitgeteilt. Die Auswahl der verwendeten Codes kann in diesem Fall von der Liste der bekannten Passwörter abhängig sein.

In einer Ausführungsform besteht das Passwort aus einem Teil des Codes 100, 101, 102 oder kann mit einer Funktion aus diesem Code ermittelt werden. Das Passwort kann sich beispielsweise aus einer mit einem öffentlichen Schlüssel prüfbaren Signatur des Codes ergeben. In diesem Fall kann das Passwort aus dem Code nur dann ermittelt werden, wenn der unbefugte Dritte die entsprechende Funktion oder den privaten Signierungsschlüssel kennt. Diese Ausführungsform hat den Vorteil, dass die Anwendung 31 die Gültigkeit des Passwortes alleine anhand des Codes prüfen kann.

In einer anderen Variante wird die Gültigkeit des Passworts anhand einer Tabelle in der SIM-Karte 30, im Mobilgerät 3 oder in einem fremden Server geprüft.

In noch einer weiteren Variante wird das Passwort im Tag 10 gespeichert und vom Tag geprüft. Diese Variante erfordert jedoch komplexere Tags, die über Datenverarbeitungsmittel verfügen, um Passwörter speichern, empfangen und vergleichen zu können.

Das Set von Codes, die im Tag 1 gelesen und vom Mobilgerät 2,3 ausgewählt wurden, wird von der Anwendung 31 in einer Bestellmeldung (zum Beispiel in einer Kurzmeldung oder vorzugsweise in einem GPRS- oder UMTS-Paket) verpackt und über das Mobilfunknetz 4 an einen Server 5 an eine bekannte Adresse gesendet, vorzugsweise einen Server innerhalb der Infrastruktur 40 des Mobilfunknetzes 4 (Figur 1). Die Dienstleistungs-Bestellmeldung wird optional vom Mobilgerät 3 oder von der SIM-Karte 30 signiert und/oder mit einem Zeitstempel versehen.

Der Server 5 verwaltet Bestellmeldungen mit Sets von Codes, die von mehreren oder möglicherweise allen RFID-Lesern 2,3 empfangen werden. Andere, komplexere Filter können im Server 5 vorgesehen werden, um Codes aus unterschiedlichen Bereichen verschieden oder gar nicht zu behandeln.

Ein Passwort kann auch vom Server 5 verlangt werden, damit der empfangene Code oder das Set von Codes überhaupt behandelt wird; dieses Passwort kann ähnlich wie im Mobilgerät aus dem Code selbst abgeleitet oder anhand einer Tabelle geprüft werden. Das Passwort wird beispielsweise zusammen mit dem Code 100, 101 in einer Meldung an den Server 5 übertragen, oder separat im Rahmen eines Dialogs.

Der Server 5 kann auch die Identität des Benutzers des Mobilgeräts 3 prüfen. Dies ist umso zuverlässiger, wenn der Server 5 vom Betreiber des Mobilfunknetzes 5 verwaltet wird. In diesem Fall kann die Identität des Benutzers beispielsweise anhand der IMSI (International Mobile Subscriber Identity) oder einer anderen Mobilteilnehmer-Identität in der SIM-Karte zuverlässig ermittelt werden. Zugriff auf gewisse Informationen und Dienstleistungen werden nur gewissen Benutzern zur Verfügung gestellt (beispielsweise Mobilteilnehmern, die über ein entsprechendes Abonnement verfügen, die einen genügenden Saldo auf einem Geldkonto vorweisen, oder deren Profil die Bereitstellung der Dienstleistung erlaubt).

Falls das Passwort falsch ist, oder wenn die gewünschte Information oder Dienstleistung aus einem anderen Grund nicht bereitgestellt werden kann, wird vorzugsweise eine Meldung an den Benutzer geschickt (beispielsweise über SMS, USSD, oder Internet). Nach mehreren Fehlversuchen können aus Sicherheitsgründen weitere Versuche definitiv oder temporär gesperrt werden. Auf diese Weise kann verhindert werden, dass gültige Codes durch mehrmalige Versuche erraten werden.

Der Server 5 ist über Internet oder ein Intranet mit einem Namen-Dienstserver 6 verbunden, in welchem für jeden Code eine entsprechende elektronische Adresse einer elektronischen Hypertext-Seite abgelegt ist. In einer Variante werden auch gewissen Sets aus mehreren Codes einer Seite zugeordnet.

Eine Anfrage 50 mit dem gerade empfangenen Code 100, 101 wird vom Server 5 an den Namen-Dienstserver 6 geleitet, der mit der entsprechenden elektronischen Adresse 60 antwortet. Die elektronische Adresse besteht beispielsweise aus einem URL oder einer anderen Adresse für ein TCP-IP Netz.

Der Namen-Dienstserver 6 kann vom Betreiber des Servers 5 verwaltet werden und/oder von externen Entitäten (beispielsweise von der Organisation, die die Codes 100 an die verschiedenen Firmen verteilt). Mehrere Namen-Dienstserver können miteinander verbunden werden, so dass die gewünschte Adresse in einem anderen Namen-Dienstserver gesucht wird, wenn sie sich nicht im Server 6 befindet. Dies erlaubt zum Beispiel einem Mobilfunknetzbetreiber, auch Codes von anderen Organisationen zu bearbeiten. Ein lokaler Cache 6 eines externen Namendienstes kann auch im Server 5 oder im Domain des Servers 5 vorgesehen werden; dieser Cache kann beispielsweise nur die Adressen enthalten, die den Codes entsprechen, die sich in Wertkarten des Mobilfunknetzbetreibers befinden.

Der Benutzer des Mobilgeräts 1 kann somit alle Sets von Codes 100, 101, 102 von allen Dienstleistungsanbietern stets an den gleichen Zielserver 5, der aus dem Namen-Dienstserver 6 oder dem Netz von Namen-Dienstservern 6 die Adresse der Seite, anhand welcher die gewünschte Information oder Dienstleistung bereitgestellt wird, ermittelt. Die Behandlung der Bestellmeldung ist somit nur vom Code in der Meldung abhängig. Gleiche Meldungen, die an unterschiedliche Server 5 mehrerer Dienstleistungsanbieter gelangen, können somit genau die Bereitstellung der gleichen Dienstleistung oder Information verursachen.

Die Verknüpfung im Namendienstserver 6 zwischen einem Code oder Codeset 100 und einer Adresse kann vorzugsweise vom Anbieter der gewünschten Information jederzeit geändert werden (beispielsweise über ein dediziertes WEB-Formular). Dies erlaubt, die elektronische Adresse einer Seite oder eines Domains zu ändern, ohne die Endbenutzer informieren zu müssen.

Die Adresse der gewünschten Seite kann somit eindeutig allein anhand der Codes oder des Sets von Codes, die im Tag 1 gespeichert sind, gefunden werden; die Seite, auf welche zugegriffen wird, ist somit völlig unabhängig von der Adresse oder Telefonnummer des Servers 5. Da viele Produkte 1 markiert werden müssen und da aus Sicherheitsgründen nicht alle Codes verwendet werden können, müssen genügend frei verfügbare Bits für die Codes vorgesehen werden, einfache IP-Nummern zum Beispiel, würden möglicherweise nicht ausreichen, da sehr viele mögliche Kombinationen bereits zugeteilt worden sind. Es wird vorzugsweise ein anderes, selbständiges Seiten-Adressierungssystem verwendet.

Der Server 5 empfängt die Antwort 60 vom Namen-Dienstserver 6 mit der gewünschten Seitenadresse und greift auf die entsprechende Seite im Server 7 zu, oder auf ein Netz mit mehreren lokalen oder fernen Servern (Anfrage 51 und Antwort 70 auf Figur 1).

In einer Variante ergibt sich die Adresse der gewünschten Seite im Server 7 aus einer Kombination der vom Namen-Dienstserver 6 angegebenen Adresse mit einem oder mehreren Bits des Codes 100. In diesem Fall entspricht die Adresse im Namen-Dienstserver 6 einem Bereich, in welchem die individuellen Seiten bestimmten Teilen der Codes entsprechen. Dies hat den Vorteil, dass der Namen-Dienstserver 6 einfacher gestaltet werden kann.

In einer weiteren Variante ergibt sich die Adresse der gewünschten Seite aus einer Kombination von mehreren Adressen, die vom Namen-Dienstserver 6 angegeben werden, und die mehreren unterschiedlichen Codes in einem Set entsprechen. Ein erster Code in einem Set kann beispielsweise einer Domäne entsprechen während ein zweiter Code einer bestimmten Seite in dieser Domäne entspricht. Gewisse Informationen werden somit Benutzern vorbehalten, die mehrere Codes lesen und vorweisen können, beispielsweise Benutzern die somit beweisen können, dass sie über zwei bestimmten Tags verfügen.

Die mehrere Codes im Tag beziehungsweise am Produkt können von einer oder mehreren Informationenanbieter in einem oder mehreren Schritten eingeschrieben werden.

Die Seite im Server 7, auf welche der Server 5 zugreift, umfasst möglicherweise einen Hypertext-Inhalt in einer Markup Sprache. In einer Variante umfasst diese Seite einen XML-Inhalt (eXtended Markup Language). In einer anderen Variante umfasst die Seite einen PML-Inhalt (Product Marking Language). Die Seite kann auch SOAP-Protokol (Simple Object Access Protocol), .NET- Framework oder andere Web-Dienste unterstützen, mit welchen der Server 5 und schlussendlich das Mobilgerät 3 auf Dienste und Objekte des Servers 7 zugreifen kann. In diesem Fall umfasst das erfindungsgemässe Verfahren die Bereitstellung von ausführbaren Programm-Code-Elementen oder SOAP- und/oder .NET-Diensten.

Der Server 5 lädt die gewünschte Seite aus dem Server 7 fern, und/oder greift auf den gewünschten Dienst (oder das Objekt an der angegebenen Adresse) zu, um die gewünschte Dienstleistung oder Information dem Benutzer des Mobilgeräts 1 bereitzustellen. Der Benutzer kann die gewünschte Information beispielsweise mit einem normalen Browser wiedergeben.

Wir werden jetzt beschreiben, wie ein bestimmtes Set von Codes im Mobilgerät 2 oder 3 ausgewählt werden kann.

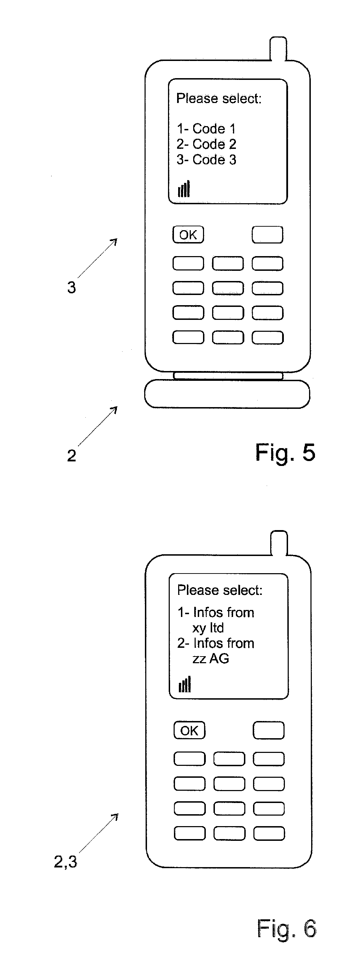

In einer ersten Variante, die anhand der Figur 5 näher erläutert wird, werden vorerst alle in nahen Tags verfügbaren Codes vom RFID-Lesegerät 2,3 gelesen und in einem Menu angezeigt, aus welchem der Benutzer ein Set mit einem oder mehreren Codes auswählen kann. Die Suche nach verfügbaren Codes, die gelesen werden, kann auch in einem vordefinierten Nummerbereich eingeschränkt werden. Im dargestellten Beispiel wird ein Menu mit drei in naheliegenden Tags gefundenen Codes angezeigt, aus welchen der Benutzer einen oder möglicherweise mehrere Codes auswählen kann, um auf die entsprechende gewünschte Information oder Dienstleistung zuzugreifen.

Je nach Codezuordnung von der zuständigen Autorität können auch zusätzliche Informationen vom Mobilgerät 2 gleich aus den gelesenen Codes ermittelt werden und im Menu angezeigt werden, damit die Codeauswahl erleichtert wird. Denkbar ist beispielsweise, dass sich die Nationalität oder die Identität der Organisation, die für einen bestimmten Code zuständig ist, direkt aus dem Code ergibt, wobei auch aus früheren Lesevorgängen gewonnenen Kenntnisse verwendet werden können.

Die gelesenen Codes können sofort an den Server 5 gesendet, oder im Speicher des Mobilgeräts 3 für eine spätere Verwendung abgelegt werden.

In der Variante, die auf der Figur 6 illustriert wird, enthält das Menu von gelesenen Codes bereits unvollständige Informationen, die aus dem Fernserver 5 oder 7 gewonnen werden. Auf der Figur wird für jeden gelesenen Code im Nahbereich der Name oder die Identifizierung der zuständigen Code-Herausgeber angegeben, die im Fernserver 7 abgelegt und vor der Anzeige des Menu abgeholt wurden. Damit wird die Auswahl des Benutzers wesentlich erleichtert. Eine vollständige Information zum ausgewählten Code kann durch Auswahl der entsprechenden Option im Menu aus dem Fernserver 7 übertragen werden. Die Anzeige der ersten Information im Menu kann kostenlos sein während möglicherweise nur das Fernladen der vollständigen ausgewählten Information verrechnet wird.

Die Figuren 5 und 6 zeigen eine Ausführungsvariante mit einem Text-Menu. Andere Möglichkeiten, um eine Menuoption auszuwählen, sind im Rahmen der Erfindung möglich; es können beispielsweise auch graphische Menus oder Sprachmenus eingesetzt werden.

Das Lesegerät 3 scannt alle erreichbaren Tags, um auf die entsprechenden Codes zuzugreifen und diese in einem Menu anzuzeigen. Die Liste von gelesenen Codes kann vor der Menuanzeige anhand von vorbestimmten Benutzerpräferenzen oder Profilen eingeschränkt werden. Es ist auch möglich, dass ein bestimmter Code, oder ein bestimmtes Set von Codes, automatisch und ohne Intervention des Benutzers ausgewählt wird. Folgende vorbekannten Kriterien können beispielsweise verwendet werden, um das ausgewählte Set von Codes, oder die angebotene Codeauswahl im Menu, zu bestimmen:
■ Benutzerpräferenzen und/oder Benutzerprofile, die entweder explizit oder implizit aus früheren Entscheidungen des Benutzers ermittelt werden.
■ Identität des Benutzers. Diese Identität kann beispielsweise anhand einer im Mobilgerät 3 vorhandenen Chipkarte ermittelt werden. Die in der SIM-Karte im Mobilgerät 3 vorhandene Mobilteilnehmeridentität MSISDN oder IMSI kann beispielsweise verwendet werden. Benutzer können auch in Gruppen gesammelt werden, die über unterschiedliche Präferenzen oder Rechte verfügen. Unterschiedliche Benutzer greifen somit auf unterschiedliche Codes oder Sets von Codes zu.
■ Andere Daten, die in der Chipkarte 30 oder im Mobilgerät 3 abgelegt sind.
■ Standort des Benutzers, der mit einem Standortbestimmungsmodul im Mobilgerät oder innerhalb der Mobilfunknetzinfrastruktur 40 ermittelt werden kann. Auf diese Weise kann ein Benutzer einen anderen Code verwenden und somit auf eine unterschiedliche Information zugreifen, je nachdem wo er sich befindet.
■ Zeit, zum Beispiel absolute Zeit, Tag der Woche, Jahreszeit, Zeit seit einem bestimmten Ereignis, usw.
■ Codewert, oder Nummerbereich, in welchem sich die gelesenen Codes befinden. Benutzer können somit beispielsweise bestimmen, dass sie nur Codes innerhalb von bestimmten Nummerbereichen verwenden wollen.
■ Verfügbarer Betrag auf einem Geldkonto, das dem Mobilgerät 3 zugänglich ist. Der Zugriff auf die Information, die bestimmten Codes zugeordnet ist, kann dem Benutzer verrechnet werden und ein Benutzer kann in seinen Präferenzen beispielsweise bestimmen, dass er nur Codes verwenden will, wenn er dies mit seinem vorbezahlten Konto auf seiner SIM-Karte bezahlen kann.
■ Parametern, die aus der Infrastruktur 40 des Mobilfunknetzes 4 ermittelt werden, einschliesslich Zeit, Benutzerstandort, Präferenzen des Mobilfunknetzbetreibers, usw.
■ Parameter, die vor der Anzeige des Menus aus dem Fernserver 7 gewonnen werden, um beispielsweise Informationen in Fremdsprachen, oder verbilligte Informationen nicht im Menu anzuzeigen.
■ Kontext der Codelektüre. Andere Codes können beispielsweise verwendet werden, je nachdem ob der Zugriff vom Benutzer oder von einer externen Vorrichtung initiiert wird.
■ Frühere Zugriffe des Benutzers auf eine bestimmte Information. Codes, die einer bereits gelesenen Seite entsprechen, oder Codes, für welche ein Passwort bereits mehrmals falsch eingegeben wurde, werden im Menu nicht mehr angeboten.
■ usw.

Der Benutzer des Mobilgeräts, oder das Mobilgerät 3 alleine, kann somit einen verfügbaren Code oder ein Set von Codes auswählen, um auf die entsprechende Information zuzugreifen.

Dieses Verfahren erlaubt es somit einem Benutzer zu entscheiden, auf welche einem Produkt zugeordneten Informationen er zugreifen will. Dabei kann die Bereitstellung der unterschiedlichen Informationen andere Zugriffsrechte voraussetzen, oder anders verrechnet werden. Andere Informationen sind nur verfügbar, wenn der Benutzer beweisen kann, dass er über ein Produkt, in welchem zwei Codes in einem oder mehreren Tags abgelegt sind, verfügt.

Im dargestellten Beispiel umfassen die Tags maximal drei Codes. Im Rahmen der Erfindung können aber auch Tags mit wesentlich mehr Codes eingesetzt werden, beispielsweise dutzende, hunderte oder tausende von Codes. Auf diese Weise kann etwa ein TV-Menu in einem Tag gespeichert werden, in welchem für jede Sendung ein Code abgelegt wird. Der Benutzer liest alle Codes im gewünschten Nummerbereich (der beispielsweise einer Zeitspanne entsprechen kann) und kann aus dem Fernserver 7 mehr Informationen oder Bestellparameter über die ausgewählten Sendungen bestellen.

## Patentansprüche

1. Verfahren, um Information über ein Produkt (1) zu erhalten, mit folgenden Schritten:
das Produkt (1) wird mit mehreren Codes (100, 101) markiert, die in einem oder mehreren RFID-Tags (10, 10') abgelegt sind,
mindestens einer der benannten Codes wird kontaktlos mit einem RFID-Lesegerät (2, 3) gelesen,
das benannte Lesegerät (2, 3) sendet ein Set von einem oder mehreren gelesenen Codes über ein Telekommunikationsnetz (4) an einen Namen-Dienstserver (6),
der benannte Namen-Dienstserver (6) antwortet mit der Adresse einer oder mehrerer Hypertext-Seiten,
es wird anhand der benannten Hypertext-Seiten auf die gewünschte Information (7) zugegriffen,
**dadurch gekennzeichnet, dass**
eine Untermenge von vom RFID-Lesegerät gelesenen Codes (100, 101) ist im benannten gesendeten Set enthalten, und dass
der oder die Codes (100, 101), die im benannten Set enthalten sind, im benannten Lesegerät (2, 3) ausgewählt werden.

2. Das Verfahren des Anspruchs 1, in welchem das benannte Lesegerät (2, 3) von einem Benutzer bedient wird,
und in welchem der oder die Codes (100, 101), die im benannten Set enthalten sind, automatisch ausgewählt werden.

3. Das Verfahren des Anspruchs 2, in welchem das benannte Lesegerät (2, 3) über Benutzeridentifikationsmittel (31) verfügt,
und in welchem der oder die benannten ausgewählten Codes von der Identität des benannten Benutzers abhängig sind.

4. Das Verfahren eines der Ansprüche 2 oder 3, in welchem das benannte Lesegerät über eine Chipkarte (31) zur Identifizierung des Benutzers verfügt,
und in welchem der oder die benannten ausgewählten Codes (100, 101) vom Inhalt der benannten Chipkarte abhängig sind.

5. Das Verfahren eines der Ansprüche 1 bis 4, in welchem das benannte Lesegerät (2, 3) über Standortbestimmungsmittel verfügt,
und in welchem der oder die benannten ausgewählten Codes (100, 101) vom Benutzerstandort abhängig sind.

6. Das Verfahren eines der Ansprüche 1 bis 5, in welchem das benannte Lesegerät über Zeitbestimmungsmittel verfügt,
und in welchem der oder die benannten ausgewählten Codes (100, 101) von der Zeit abhängig sind.

7. Das Verfahren eines der Ansprüche 2 bis 6, in welchem ein Profil des Benutzers dem benannten Lesegerät zugänglich ist,
und in welchem der oder die benannten ausgewählten Codes (100, 101) vom benannten Profil abhängig sind.

8. Das Verfahren eines der Ansprüche 1 bis 7, in welchem der oder die Codes (100, 101) in Abhängigkeit von deren Wert ausgewählt werden.

9. Das Verfahren eines der Ansprüche 1 bis 8, in welchem ein elektronisches Geldkonto dem benannten Lesegerät (2, 3) zugänglich ist,
in welchem das benannte Geldkonto belastet wird, damit auf die benannte Information zugegriffen wird,
und in welchem der belastete Betrag vom ausgewählten Betrag abhängig ist.

10. Das Verfahren eines der Ansprüche 1 bis 9, in welchem das benannte Lesegerät aus einem Mobilgerät (2, 3) besteht oder mit einem Mobilgerät (3) verbunden ist,
und in welchem das benannte Telekommunikationsnetz (4) ein zellulares Mobilfunknetz ist, in welchem das benannte Mobilgerät (3) angeschlossen ist.

11. Das Verfahren des Anspruchs 10, in welchem das benannte Mobilfunknetz (4) ein zentrale Infrastruktur (40) umfasst,
und in welchem der oder die benannten ausgewählten Codes von Parametern, die aus der benannten Infrastruktur ermittelt werden, abhängig sind.

12. Das Verfahren eines der Ansprüche 1 bis 11, in welchem das benannte Lesegerät von einem Benutzer bedient wird,
und in welchem der oder die Codes, die im benannten Set enthalten sind, vom benannten Benutzer ausgewählt werden.

13. Das Verfahren eines der Ansprüche 1 bis 12, in welchem das benannte Produkt (1) mehrere Codes (100, 101) enthält,
und in welchem das benannte Set einen der benannten Codes (100, 101) enthält.

14. Das Verfahren eines der Ansprüche 1 bis 13, in welchem das benannte Produkt (1) mehrere Tags (10, 10') mit je einem Code (100, 101) umfasst.

15. Das Verfahren eines der Ansprüche 1 bis 14, in welchem das benannte Produkt (1) mindestens ein Tag (10) mit mehreren Codes (100, 101) umfasst.

16. Das Verfahren eines der Ansprüche 1 bis 15, in welchem das benannte Lesegerät (2, 3) mehrere erreichbare benannte Codes liest und dann ein Set aus den gelesenen Codes auswählt.

17. Das Verfahren eines der Ansprüche 1 bis 15, in welchem das benannte Lesegerät (2, 3) erreichbare benannte Codes liest, und das Scannen nach weiteren Codes abbricht, sobald ein passendes Set von Codes gefunden wurde.

18. Das Verfahren eines der Ansprüche 1 bis 17, in welchem dem Benutzer ein Menü mit mehreren gelesenen Codes zur Auswahl angezeigt wird.

19. Das Verfahren des Anspruchs 18, in welchem das benannte Menü bereits unvollständige Informationen enthält, die aus der benannten Hypertextseite gewonnen werden.

20. Das Verfahren eines der Ansprüche 1 bis 19, in welchem ein Passwort verlangt wird, um auf die Information, die mit mindestens gewissen Codes verbunden ist, zuzugreifen,
und in welchem das benannte Passwort, das für unterschiedliche Codes verlangt wird, unterschiedlich ist.

21. Das Verfahren eines der Ansprüche 1 bis 20, in welchem gewisse Informationen Benutzern vorbehalten sind, die mehrere Codes lesen und vorweisen.

22. RFID-Tag (10), in welchem mehrere unterschiedliche Codes (100, 101) in einem Nur-Lese-Speicherbereich abgelegt werden,
wobei die benannten Codes die gleiche Anzahl von Bits umfassen und somit als Zeiger für einen Namen-Dienstserver (6) dienen,
und in welchem alle benannten Codes über die gleiche RFID-Schnittstelle von aussen lesbar sind.

23. Das RFID-Tag (10) des Anspruchs 22, in welchem nur die benannten Codes (100, 101) über die benannte Schnittstelle lesbar sind.
